# EUROPEAN PATENT APPLICATION

(11) **EP 2 747 004 A1**
(43) Date of publication of application: **25.06.2014**
(21) Application number: 12198925.5
(22) Date of filing: 21.12.2012
(51) Int. Cl.: G06Q 10/08

(54) **Cargo monitoring and tracking system**

(71) Applicant: Wide-Roots Telecomunicaciones S.L., 28703 Madrid (ES)
(72) Inventor: Dominguez Latorre, Francisco Javier, 15679 El Temple (ES)
(74) Representative: Albrecht, Ralf

(57) **Abstract**

The present invention relates to a cargo monitoring and tracking system. The system comprises at least one cargo location device, configured to be disposed at, especially hidden in a cargo item or a group of cargo items, at least one cargo supervising device configured to be disposed at a transport means for the cargo items and cargo control means. The at least one cargo location device is configured to be operated in a monitoring mode in which it transmits a monitoring radio signal adapted to be received by the at least one cargo supervising device and a tracking mode in which it transmits a tracking radio signal which is traceable by tracking means. Furthermore the cargo location device is configured to automatically switch between the monitoring mode and the tracking mode.

## Description

The present invention relates to a cargo monitoring and tracking system.

The transportation of cargo brings along many risks, among others the risk of cargo items being lost or stolen. Therefore, especially if valuable cargo is handled, there is a need for security measures to ensure safe and reliable cargo transportation by land, sea or air.

One possibility to improve security during transportation is to hire security personnel, which guards the cargo during transportation. To provide a high level of security, the personnel has to be specifically trained, maybe even armed and needs to stay with the cargo during the whole transportation procedure. This approach is therefore usually very expensive and only practicable, if quite valuable items are being transported.

An alternative to hiring security personnel is to use technical equipment to improve security. It is known from the state of the art to implement monitoring systems using GPS, GSM or satellite techniques to observe cargo during transportation. In US 8,078,139 B2 for example, a cargo monitoring system is disclosed, which facilitates the monitoring of shipping containers in which cargo items are transported. The system comprises a number of wireless communication gateways that are each joined with a shipping container to be monitored. The gateways are on one hand in short range wireless communication with a number of communication devices, each being associated with a piece of cargo positioned within the container. The communication between the gateways and the communication devices takes place using radio frequency signals. On the other hand the gateways are in long distance communication with a server based monitoring application, embodied by a network server, via a wide area network. The gateways for example can communicate with the server based application via Wireless LAN (wireless local area network), Bluetooth, mobile-phone, satellite or other long range wireless communication capabilities.

The monitoring system disclosed in US 8,078,139 B2 has proven to be useful and liable for fleet monitoring, especially for the observation of the transportation status of the shipping containers and the cargo transported therewith. Nevertheless, if a cargo item is removed from the shipping container, for example due to theft, the cargo item can no longer be observed with the system disclosed. The cargo therefore will be lost and a significant financial damage for its owner or the owner's insurance company will be caused.

It is therefore an object of the present invention to provide a system, which facilitates improved security means for cargo transportation procedures.

According to the present invention, this object is solved by a cargo monitoring and tracking system, comprising:
- at least one cargo location device, configured to be disposed at, especially hidden in a cargo item or a group of cargo items, the cargo location device comprising means for transmitting and receiving radio signals, a central processing unit and at least one energy source,
- at least one cargo supervising device configured to be disposed at a transport means for the cargo items, comprising means for transmitting radio signals to and receiving radio signals from the at least one cargo location device, means to send and receive information via a wide area network and at least one energy source, and
- cargo control means, comprising means for wirelessly sending data to and receiving data from the at least one cargo supervising device via a wide area network and a database, the cargo control means being configured to store data, especially data that has been sent to or received from the at least one cargo supervising device, in the data base,
wherein the at least one cargo location device is configured to be operated in a monitoring mode in which it transmits a monitoring radio signal adapted to be received by the at least one cargo supervising device and a tracking mode in which it transmits a tracking radio signal which is traceable by tracking means and wherein the cargo location device is configured to automatically switch between the monitoring mode and the tracking mode.

In other words the system according to the present invention allows on one hand the monitoring of one or more cargo item(s) during transportation with a transport means, such as a car, truck, train, ship or other and on the other hand in case a cargo item or a group of cargo items is stolen, the system allows for the tracking and retrieval of the stolen asset(s). The cargo items to be monitored and tracked with the system according to the present invention can be any items of interest, especially valuable items for example cars or jewelry, electronic items, such as computers, TV sets, mobile phones, food, cigarretes, high value electronic components such as processors, munitions, explosives, dangerous cargos, and pharmaceuticals.

The system according to the present invention is a modular system that comprises a number of components. It is in general divided into two main sections. One section comprising the components that always travel along with the cargo, comprising the at least one cargo location device (CLD), configured to be disposed at the cargo item(s) and the at least one cargo supervising device (CSD), which is disposed at the transport means. The other section, which comprises the cargo control means (CCM), does not travel along with the cargo but might be located far away from it and will be in wide range communication with the components travelling along with the cargo, at least with the CLD(s) and CSD. The CCM preferably comprise a cargo control center (CCC), configured to control the at least one CSD and/or a cargo management server (CMS), configured to keep data bases with information about the at least one CSD, the at least one CLD and about date, time and position. The CCC and the CMS can be located in the same place or can be spatially separated.

At the least, the system according to the present invention comprises the CCM, one CSD and one CLD. If only one CSD and CLD is provided, this will be sufficient to monitor one transport means and one piece of cargo or one group of bundled cargo pieces positioned in the transport means. Since usually not only one cargo item or bundle of cargo items has to be monitored, it is preferred that not only one but a number of CLDs is provided, in particular one CLD for each cargo item or bundle of cargo items respectively.

Furthermore, there can be more than one CSD in the system according the present invention. If for example more than one transport means is used for cargo transportation, each transport means is preferably equipped with its own CSD. This might be the case when a number of cargo items belonging together are for example transported with a convoy of trucks. The CLDs that are hidden within the cargo pieces positioned in each truck are then preferably assigned to the CSD which is joined to the respective truck and the CSD will preferably only be in communication with the CLDs that are assigned to it. If alternatively a ship is used for transportation, there can also be provided more than one CSD, because on a ship it is common to transport/store cargo items within many shipping containers. A CSD can then be provided for each shipping container. In the same manner if a train is used for cargo transport there can be provided a CSD for each railway car.

On the other hand the system according to the present invention might comprise many CSDs as well as many CLDs to allow for the system to simultaneously monitor the cargo transportation procedure of many customers (which can be for example a cargo owner, an insurance company, a risk management company, a transporter, a truck owner etc.). In this case each customer needs to use transport means that are equipped with one or more CSD(s) and a number of CLDs for his cargo items.

The CLD according to the present invention is an autonomous device, which might especially have the form of a box. It is configured to be disposed at a cargo item or a group of cargo items, in particular to be joined with the item(s). Preferably, the CDL is configured to be hidden in the cargo items, so it will not be observed by a potential thief. The CLD has means for transmitting and receiving radio signals, to be able to communicate with the at least one CSD of the inventive system, a central processing unit for processing data, and at least one energy source, for example a battery, which might especially be rechargeable, which supplies the electrical energy for the operation of the CLD. The energy source is configured to be able to electrically supply the CLD during the whole duration of the cargo transportation procedure. This procedure can for example last several days, weeks or months. The CLD preferably is a half-duplex digital modulation radio frequency transceiver in the most simple configuration, but can be any other compatible wireless media.

Furthermore, the CLD is configured to be operated in a monitoring mode as well as a tracking mode, to allow on one hand the monitoring and on the other hand the tracking of cargo. The CLD therefore is configured to emit different kinds of radio signals in the two modes. In monitoring mode the CLD intermittently emits a "proof of life" check message to the CSD, which preferably contains a unique serial number of the CLD, a relative signal strength indicator (RSSI)-level, a radio frequency power set and an acknowledge alert message. Every time the CLD emits a "proof of life", the CSD will acknowledge back. The RSSI received level is maintained in a rolling average data table inside the CLD, and also transmitted in the next Proof of life. In the same way, the CSD will keep track of the RSSI received from every CLD POL signal. By this means, the system will determine automatically any change in proximity between the CSD and any particular CLD hidden in the cargo. The CLD subsequently waits for feedback, i.e. an acknowledge signal from the CSD, in return. When the CLD is not sending a check message and not waiting for the CSD to respond, the CLD is sleeping to save energy of its internal energy source. In tracking mode however, the CLD emits a signal intended to facilitate the tracking and location of the CLD. It particularly transmits an acknowledge message which preferably also contains a unique serial number of the CLD and additionally a tail of zeroes which extend the signal length for the tracking means. These zeroes are necessary for the receiving tracking means, to compute direction of the origin of the transmission, without disturbing the data section of the signal. Furthermore, in tracking mode the repetition rate of the tracking signals emitted by the CLD as well as the signal strength will preferably be higher than in monitoring mode.

Due to the transmission of the tracking signal, which is traceable by tracking means, the tracking of a lost or stolen cargo item is possible even if the cargo item and therefore the CLD hidden therein is far away from the CSD, which usually is the case when a piece of cargo is stolen and the thief is on the run. The CLD is furthermore configured to be able to automatically switch itself from monitoring mode to tracking mode. This will happen in response to a certain event. Due to this it is ensured, that the tracking mode is activated in case of theft, without the CLD being dependent on any other device.

The CSD according to the present invention is provided for the monitoring and controlling of the at least one CLD. The CSD registers the CLDS. In analogy to the CLD, the CSD is also an autonomous device, which might especially have the form of a box. The CSD preferably will be positioned in close proximity to the cargo, in particular within or on the transport means for the cargo. The CSD contains redundant WAN communication devices, such as cellular modems, satellite communication systems, WiFi communicationn systems and the like, or the combination of the above. Like the CLD, the CSD comprises an independent energy source, for example a battery, which might especially be rechargeable. The energy source has sufficient power to sustain all supervision and communication/ reporting tasks during the whole cargo transportation procedure, especially over the period of time of a given long-haul transit cargo trip.

The CSD is configured on one hand to be in short range communication with the at least one CLD and on the other hand, to be in long range communication with the CCM. Therefore, the CSD comprises means for transmitting radio signals to and receiving radio signals from the at least one CLD. The means for transmitting and receiving radio signals are especially configured to allow a half-duplex two-way data communication in the radio frequency channel with the at least one CLD. The communication network implemented between the at least one CSD and the at least one CLD might also be referred to as the "Cargo RF LAN" (Cargo Radio Frequency Local Area Network). The supervision information about the at least one CLD which is collected by the at least one CSD will preferably be formatted in a small data packet along with position, date and time and be send to the CMS. All information about the cargo in transit and the status of the one or more CLD(s) hidden in the cargo will be transmitted back to the CMS. The data can also be used by the CCM to generate reports for customer service. In particular the time of transit, distance position and the like might be communicated to a customer to keep him up to date.

On the other hand the CSD comprises means to send and receive information via a wide area network. This means are especially configured for communication between the CSD and the CCM. In a preferred embodiment the means to send and receive information via a wide area network are configured to allow full duplex data communication between the CSD and the CCM. Available communication systems, such as GSM, GPRS, UMTS, and/or satellite might be used for the communication between the at least one CSD and the CCM, in particular the CCC and the CMS. This long range communication network might also be referred to as the "Cargo WAN" (Cargo Wide Area Network).

The CSD is furthermore configured for remote programming of the at least one CLD, especially for remote programming of the serial number of the at least one CLD. This enables exclusive supervision of the particular devices.

The at least one CLD and the at least one CSD are preferably ruggedized so that they can be installed in rough environments also. They preferably are for example at least configured water proof and shock resistant.

The CCC is a 24/7 control center. It provides all of the monitoring tasks of the cargo in transit. The CCC in particular provides centralized control and status of all CSDs, provides means to activate CLDs and receives updated tracking information from the tracking means. It also provides coordination with customers and authorities. The CCC has full access to all commands to the CSDs and monitors the status of all CSDs.

The CMS is the backend and heart of the operation of the system according to the present invention. It is configured to send and receive all necessary information to and from the at least one CSD. The CMS keeps data bases of all CSDs, CLDs, position, time, date, etc. It furthermore provides a mapping service for display of the CLD's positions to the CCC and the customer. The CLDs are registered within the CMS, which provides each CSD with a listing of all the CLDs to be monitored for a given shipment of cargo items, records all data received from the CSD including date, time, mapping, position and status and provides updated information to the CCC. For safety reasons, the CMS is - in a manner known per se - preferably positioned at a safe location for data servers.

In general, one CCC and one CMS will be sufficient to monitor and control all CSDs and CLDs of the system according to the present invention, even if the cargo transport procedures of many customers are monitored simultaneously. Alternatively, the system according to the present invention might comprise more than one CCC and CMS, for example one CCC and one CMS in each country, in which the system is implemented.

According to one embodiment of the present invention, the at least one CLD comprises means for determining its relative spatial distance to the CSD and is configured to switch from monitoring mode to tracking mode when a given minimum of RSSI value of spatial distance is exceeded and/or when a current value of spatial distance is changed. Therefore, in this embodiment the event that triggers the CLD to automatically switch itself from monitoring mode to tracking mode is the exceeding of a maximal spatial distance between the CLD and the CSD. The given value of distance might for example be chosen corresponding to the dimensions of the transport means, in which the cargo is positioned, for example a truck, so that the tracking mode is activated, as soon as a piece of cargo, in which a CLD is hidden, will be removed from the transport means, i.e. the truck. The current distance value between the CLD and the CSD can for example be determined by the CLD by measuring the signal strength of the radio signals transmitted from the CSD to the CLD. The signal strength can be expressed as an RSSI-value (received signal strength indication value). The central processing unit (CPU) of the CLD will in a preferred embodiment, based on a specific algorithm, continuously calculate the changes in RSSI-value from the CSD to monitor the CLD's current proximity to the CSD. The tracking mode can then be activated alternatively or in addition, whenever a change in proximity, i.e. a change that exceeds a maximum change-value is registered.

Furthermore, the at least one CLD can be configured to switch from monitoring mode to tracking mode when a radio signal transmission from the at least one CSD the at least one CLD ends. The transmission from the CSD can for example be ended intentionally, to activate the tracking mode of the CLD. Also, if the CSD is destroyed, possibly by a thief who stole a cargo item, the transmission of signals will end and the CLD will switch to tracking mode.

According to another preferred embodiment, at least one wireless alarm device, which is configured to be joined to the transportation means for the cargo items is provided, the at least one wireless alarm device comprising means for transmitting radio signals to and receiving radio signals from the at least one CSD, at least one energy source and an alarm mechanism, which can be manually activated by a user. The wireless alarm device is also referred to as a "panic button" (PB). The at least one PB is an autonomous, self-powered, in particular ruggedized device that can be positioned in close proximity to the cargo to be monitored, especially within the transport means. If a truck is used as transport means, the at least one PB will preferably be positioned inside the truck's cargo hold, for example on the inner wall of the cargo hold, or in the cabin of the truck. The at least one PB allows a user, for example the truck driver or a person escorting the cargo, to manually activate an alarm mode in an emergency situation. The PB therefore preferably comprises a button to be pressed by the user. When the alarm mechanism is activated, i.e. the button is pressed, a signal will be wirelessly transmitted from the PB to the CSD joined to the transport means. The CSD will in response to the signal deliver an emergency alert to the CCC which can take further action. The CSD preferably is adapted for a two-way communication with the at least one PB. One or more PB(s) can be positioned within the transport means. Each PB has - in analogy to the CLDs - a unique serial number for identification. The CSD will be remotely programmed with serial numbers of the PB that are to be used during cargo transit. The radio frequency communication of PB and the CSD preferably works in the same channel as the CLDs.

For the case that at least one wireless alarm device (PB) is provided within the system according to the present invention, the at least one CLD is preferably configured to switch from monitoring mode to tracking mode when the alarm mechanism of the wireless alarm device is manually activated by a user. Following this, the CLD can be switched from monitoring mode to tracking mode in response to a user the manually giving an alarm, for example when the user observes a theft.

According to another preferred embodiment of the present invention, the means for transmitting and receiving radio signals of the at least one CLD comprise a radio chip, which is configured to generate modulated radio signals and to demodulate radio signals and/or at least one antenna and/or a power amplifier. The radio chip of the CLD is in charge of generating modulated radio frequency signals to be transmitted from the CLD and of demodulating signals that are received by the CLD. Data sent or received by the radio chip will be exchanged with the CPU of the CLD, which is in charge of data analysis of the radio signals received, especially in charge of determining the current distance to the CSD from the signal strength of the radio signals sent by the CSD. The antenna is - in a manner known per se - provided for emitting and receiving radio signals. The antenna might be a radio frequency pigtail. The length of the antenna depends on the particular frequency that is used for communication between the CLD, the CSD and the tracking means. Furthermore, in a known manner, too, the power amplifier allows for the transmission of radio frequency signals.

It is further preferred that the energy source of the at least one CLD comprises a primary battery, a transmit battery and a battery power management system. The primary battery preferably is for the operation of the CPU and the radio chip of the CLD. It is a long time, low current battery. Furthermore, since the power drain for the operation of the radio frequency power amplifier is comparably high, a transmit battery especially dedicated to the radio frequency power amplifier is provided according to this embodiment. Both, the transmit and the primary battery can be either rechargeable or non-rechargeable batteries depending on the operation parameters desired. The power battery management system is for control of power consumption from the two batteries.

According to another embodiment of this invention, the at least one CLD is configured to intermittently send check radio signals to the at least one CSD in monitoring mode and the at least one CSD is configured to intermittently send acknowledge radio signals to the at least one CLD in response to the check radio signals. This ensures that a constant communication between the CSD and the CLD is maintained. If more than one CLD is provided, each CLD preferably transmits a unique check message, which can for example contain the unique serial number of the CLD, to be able to identify the respective CLD and therefore the specific cargo item, in which the CLD is hidden. Besides from a unique serial number, the check message of the CLD can further comprise data about the current RSSI-value of the CSD, which has been determined by the CLD.

It is further preferred that the at least one CLD comprises a GSM radio modem configured to be registered to a cellular network. This embodiment allows to determine the position of a CLD equipped with a GSM modem using a cellular network. In a manner known per se this is usually possible with a precision of at least up to one cell of the cellular network. In monitoring mode this embodiment can provide redundancy, because not only the position of the CSD will be determined, but also the position of a CLD via cellular net. Therefore the GSM modem will be registered to a cellular network during transit of the cargo. For the provision of redundancy regarding the position of the transport means, it is sufficient if one CLD within the transport means is equipped with a GSM radio modem. Furthermore, in tracking mode this embodiment allows for the CLD being traceable not only by tracking means, which are especially installed for a tracking purpose, but by an existing cellular network. Cellular networks are widely implemented nearly all over the world and can - according to this embodiment - be used to support the tracking procedure. After the cell has been identified, in which a stolen cargo item equipped with a CLD comprising a GSM radio modem is hidden, it can be located in a more precise manner with the tracking means that are listening to the CLD's specific tracking signal.

According to another embodiment of the invention, the at least one CSD comprises means for determining its spatial distance to the at least one CLD and is configured to switch to an alert mode when a given value of spatial distance is exceeded and/or when a current value of spatial distance is changed. In analogy to an aforementioned specific embodiment of the CLD being able to determine spatial distance to the CSD, the CSD also can be configured to monitor its proximity to the CLD and to automatically activate an alert mode, when its distance to CLD has exceeded a given value, or in general, has changed. When the alert mode is activated, preferably also the tracking mode of the at least one CLD(s) is activated.

The at least one CSD can furthermore be configured to communicate with a number of CLDs which are assigned to the at least one CSD. As mentioned above, usually, a number of cargo items will be transported within a transport means. Then preferably a number of CLDs, in particular one CLD for each piece of cargo or one CLD for each (small) group of cargo pieces will be used. It is particularly advantageous if one CLD is hidden within each piece of cargo, because then each piece can individually be identified, monitored and tracked, if stolen. On the other hand it is more economical to group a number of cargo pieces and assign a CLD to the group. It will depend on the kind of cargo to be monitored and tracked, which alternative is better. If for example cars are transported, each car should be equipped with a CLD. If, however, smaller and less valuable cargo items have to be monitored and tracked, one CLD per bundle of items might also be sufficient.

In case a number of CLDs is provided within the transport means in which the cargo items are positioned, the number of CLDs will be assigned to one CSD, which is joined to the transport means. The assignment of CLDs might be implemented via the use of unique serial numbers as mentioned above. The CSD can for example program the (identically constructed) CLDs by assigning a unique serial number to each of the CLDs, or each CLD has a fixed unique serial number stored and the CSD gets a list of serial numbers which are assigned to it.

If the at least one CSD is configured to communicate with a number of CLDs that are assigned to it, and check and acknowledge messages are exchanged between the CSD and the CLDs, the CSD is preferably configured to allocate specific time slots for the transmission of the check radio signals to each of the number of CLDs, the time slots for different CLDs especially not being in overlap with each other. According to this embodiment, the cargo RF LAN (small network of CLDs and CSD) can be synchronized. Therefore a time mark of the internal cycle of supervision is transmitted from the CSD to each CLD assigned to the CSD, which in particular are on a list stored on the CSD. Based on the time mark sent to each CLD by the CSD, each CLD will set its internal clock so that the next (proof-of-life) check message transmitted by the CLDs will be synchronized with the CSD. The CSD in particular assigns non-overlapping time slots to the CLDs which are assigned to it, so that the CLDs do not transmit simultaneously, but in a staggered manner. This avoids failures that might occur due to interference effects. The synchronization also allows a low power consumption of the CLDs, since they will be sleeping, i.e. all internal circuits of the CLDs will be turned off, between the specific time slot allocated to each CLD, in which the check message is transmitted.

It is further preferred, that at least one display means (DM) for displaying data to a user is provided, in particular to a driver of the transport means for the cargo, which is configured to be disposed at a transport means, the at least one display means comprising means for transmitting radio signals to and receiving radio signals from the at least one CSD. The DM enables the control as well as health checks of the system. The DM is in wireless communication with the CSD to exchange data and to provide text messaging between the driver and the CCC or customer. The DM can for example provide an optical alarm signal, whenever a CLD switches from monitoring to tracking mode to inform the driver or another person escorting the cargo about cargo being stolen or lost. Additionally it can be displayed on the DM whenever a wireless alarm device is triggered. In this way, the driver of a truck for example can be informed when a person in the back triggered the wireless alarm device. The DM preferably is positioned in the transport means in such a way, that the driver of the transport means or another person can conveniently watch the DM. When the cargo is transported via truck, it is preferably installed in the cabin of the truck.

According to another preferred embodiment, the at least one CSD comprises at least one GPS receiver and/or at least one GSM module and/or at least one Bluetooth module and/or at least one antenna and/or at least one serial hub controller. The GPS receiver allows the CSD to determine location information, speed, time and date at any time during the cargo transport procedure. According to a preferred embodiment, two GPS receivers are provided in order to increase GPS information availability and reliability. The GSM module is a module for GPRS data communication over the cellular footprint with the CMS of the CCM. Also two GSM modules with two different carriers can preferably be provided in order to increase data communication reliability. If display means (DM) are provided, the CSD can for example wirelessly communicate with the DM via the Bluetooth module.

According to yet another embodiment, the at least one CSD might comprises a RF CLD supervisor unit with a radio chip, a radio power amplifier and a central processing unit. The structure of the RF CLD supervisor unit in general corresponds to that of a single CLD, but has different internal programming. There is a radio chip and power amplifier for the link with the at least one CLD. The RF CLD supervisor unit is always monitoring the CLD-channel, in particular the VHF channel, in order to listen to the check messages (with proof of life rate) from the at least one CLD. In Particular, a list of a number of CLDs that have to be monitored during a specific cargo transport trip is sent from the CCC. The list is delivered from the CCC through the GSM-GPRS network to the CSD and internally from the GSM module to the RF CLD supervisor unit, passing through a serial hub controller that is provided within the CSD. Due to the list the RF CLD supervisor unit will know, what specific CLDs are going to be acknowledged. Once the RF CLD supervisor unit of the CSD receives and decodes a signal from any CLD, if the serial number of the CLD is not on the list, the RF CLD supervisor unit will not respond with an acknowledge signal.

The serial hub controller of the CSD is in charge of internal serial communications between the GSM modules, the RF CLD supervisor unit and the DM.

It is further preferred, that the CCM are configured to send information to and receive information from a customer via a software based, especially web based, customer information system. The customer information system (CIS) might comprise a group of software applications that are preferably loaded in the CMS of the CCM, in order to give the customer appropriate resources to deliver shipment registration notifications, ask for special commands to the CCC, monitor the cargo in transit, finish cargo transportation trips, etc. The applications are preferably secure web based applications. The CIS will be provided with updated information in real time by the CMS. With proper security authentication customers can via the CIS or via phone call also ask the CCC to deliver commands to the CSDs. They can also activate and deactivate CLDs via commands over the CIS, which are received by the CCC. This is especially useful if the customer wants to set up trips of cargo transportation on his own.

According to a further embodiment tracking means, especially stationary and/or mobile tracking devices are provided, which are configured to trace a tracking radio signal transmitted by the at least one CLD in tracking mode. The tracking means are network components that are deployed on the field in order to ensure automatic location and tracking of the CLDs. The tracking means preferably comprise fixed units, for examples towers which are configured to receive the tracking signals from the CLDs, wherein the towers are forming a net over a given spatial region, as well as mobile units, for example cars equipped with devices that can receive the tracking signals of the CLDs. The fixed units of the tracking means are also referred to as the cargo listening stations (CLS) and the mobile units as the cargo tracking stations (CTS). The tracking means listen to the periodic messages that are transmitted from the CLDs by monitoring the CLDs channel. They decode all messages from the CLDs and report all relevant information (serial number, position, date, time and RSSI-value) to the CMS. Furthermore, the CCC receives updated tracking information from the CLSs and the CTSs. The CCC then has real time information about position and can easily coordinate the CTSs for final tracking and location. In order to be able to monitor the cargo in transit in real time, it is necessary to deploy a network of tracking means with a wide geographical coverage.

The tracking means preferably comprise a radio frequency direction finding unit, which is configured to determine the bearing angle of the tracking signal transmitted from the at least one CLD in tracking mode, especially by application of a Doppler shift based radio frequency direction finding technology. The radio frequency direction finding unit - in a manner known per se - comprises four or eight omni-directional antennas that are arranged in a circular pattern. The antennas are connected to an RF combining or a so called "summer" circuit, which allows the signals of the antennas to be combined in a way which simulates a continuous rotation of the circular antenna array about its axis of symmetry. The "rotating" antennas, which are used as a receiver, then relatively "move" with respect to the transmission source of the radio signal and the Doppler-effect can be used to determine the bearing angle of the transmission source in a manner known to the person skilled in the art. Equipped like this, the tracking means can identify the direction from which a CLD, which is hidden in a stolen cargo item to be tracked, is transmitting. Knowing the direction of origin, moveable tracking means can be sent for final tracking of the cargo item.

For secure storage of all the system's components which are to be joined with the cargo and/or transport means, i.e. the CSD, CLDs, the PBs and the DM during non-transport periods, there can be provided a "kit box", in which the components are stored while not in use. The "kit box" can according to a preferred embodiment comprise a deactivation mechanism, which automatically deactivates the CSDs and CLDs, PBs and DM as soon as they are positioned within it. This allows for an especially comfortable and energy saving handling of the component, which are usually handed over to the user. He can keep the components together in a tidy and secure manner.

A further aspect of the present invention is a cargo location device, configured to be disposed at, especially hidden in a cargo item or a group of cargo items, the cargo location device comprising means for transmitting and receiving radio signals, a central processing unit and at least one energy source, and being configured to be operated in a monitoring mode in which it transmits a monitoring radio signal, which is receivable by monitoring means and a tracking mode in which it transmits a tracking radio signal which is traceable by tracking means and wherein the cargo location device is configured to automatically switch between the monitoring mode and the tracking mode.

For the monitoring of cargo items during their transportation, according to the present invention in particular each transport means will be equipped with a CSD, one or more PBs and at least one DM. Furthermore, one or more CLD(s) will be provided for monitoring and in the event of stolen cargo for tracking cargo items. The CLDs will be hidden within the cargo in the transport means.

Afterwards, the system according to the present invention will be set up for a given trip by the customer through the CIS, with a shipment notification to the CCC. The CCC acknowledges the notification by returning a "green light" to the customer and also to the driver of the transport means. Alternatively, the shipment notification could be driver originated to the CCC, which would also return a "green light". From this moment on, the CLDs will start to transmit their unique check messages to the CSD with a preset proof-of-life-rate and the CSD will acknowledge all check messages from the CLDs. Every time the CSD receives a check message from a CLD, it replies with an acknowledge message to the respective CLD, including not only the acknowledge itself, but also a time stamp of the clock of its internal system and the serial number assigned to that particular CLD. The CLD then has enough information, to synchronize its own check message transmission, which ensures that there is no overlap with transmissions of other CLDs. Once every CLD assigned to that particular CSD has been acknowledged, the CSD formats a message with the information about serial numbers of the CLDs, RSSI values received, position, time and date and reports this message to the CMS via the main communication channel of the wide area network (for example via GSM, GPRS, satellite or other). This is the information that will be monitored by the CCC and by the customer via the customer information system.

The CSD also determines the average RSSI value of every CLD and creates a chronological history. At the same time, there is an algorithm running in the CPU of the RF CLD supervisor of the CSD, which monitors the RSSI values between the CSD and the CLDs that are determined by the CSD. If the value drops to a level that indicates that one or more CLD(s) and therefore one or more pieces of cargo is/are no longer in range, because the cargo for example is stolen, the CSD delivers an alert message to the CCC.

Also, since the CLDs are no longer detecting acknowledge messages from the CSD, the CLDs will automatically switch from monitoring mode to tracking mode. In this mode the CLD transmits the tracking signal, which contains its unique serial number for identification and a tail of zeroes for the tracking equipment to perform direction finding and location of the cargo. By transmitting the tracking signal the tracking operation of the fixed and mobile tracking means is facilitated. Simultaneously, the internal CPU of the CLD continuously calculates the changes in RSSI level from the CSD. When the CLD decides, based on the specific algorithm, that proximity to the CSD has changed over or below a given threshold, it automatically switches to tracking mode.

After one operation of tracking and detection of the cargo, the batteries of the CLDs, CSDs, PBs and DMs preferably are replaced by fresh ones or recharged to ensure operation for the next tracking cycle.

For the wireless communications between the CLDs, the CSD and tracking means according to the present invention, in general all communication channels can be used. Usually the communication channels are regulated, depending upon the country in which the system according to the present invention is intended to operate. Once the correct frequencies are identified, there are no restrictions preventing the wireless links between the CLDs, the CSD and the tracking means.

According to the present invention, due to the combination of monitoring the cargo in monitoring mode and being able to trace a stolen cargo item, that is equipped with a CLD, in tracking mode, a holistically cargo transportation security procedure, covering all possible events, is ensured.

In the following, the system according to the present invention is presented in detail by means of the examples given in the figures 1 to 5. From these figures,
- figure 1: shows a block diagram of the components of one embodiment of a cargo monitoring and tracking system according to the present invention,
- figure 2: shows a block diagram of the internal components of the CLD shown in figure 1,
- figure 3: shows a block diagram of the internal components of the CSD as shown in figure 1 as well as a display means,
- figure 4: shows the CLDs, CSD, PBs and DM shown in figure 1 being disposed at a truck and
- figure 5: shows the CLDs being in communication with the tracking means, i.e. the CLSs and CTSs.

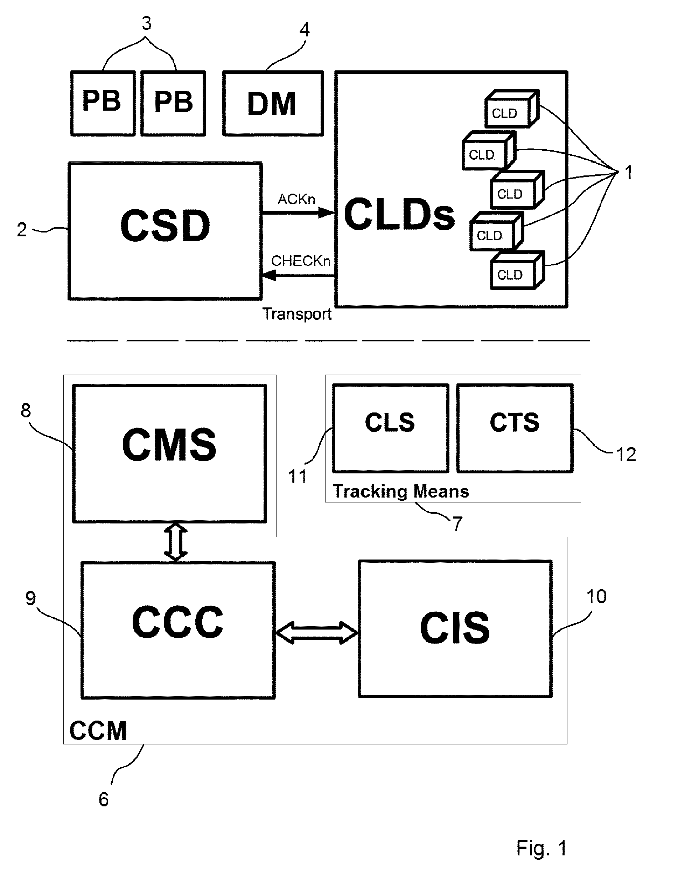

Figure 1 shows a schematic representation, in particular a block diagram of one embodiment of a cargo monitoring and tracking system according to the present invention. The system is a modular system comprising several components that can in general be divided into two main sections. The first section, shown in the upper part of figure 1, comprising components of the inventive system, that always travel along with cargo pieces that are to monitored during their transportation and a second section, shown in the lower part of figure 1, comprising components of the system being located remote from the cargo. The first and the second section are divided by a dashed line.

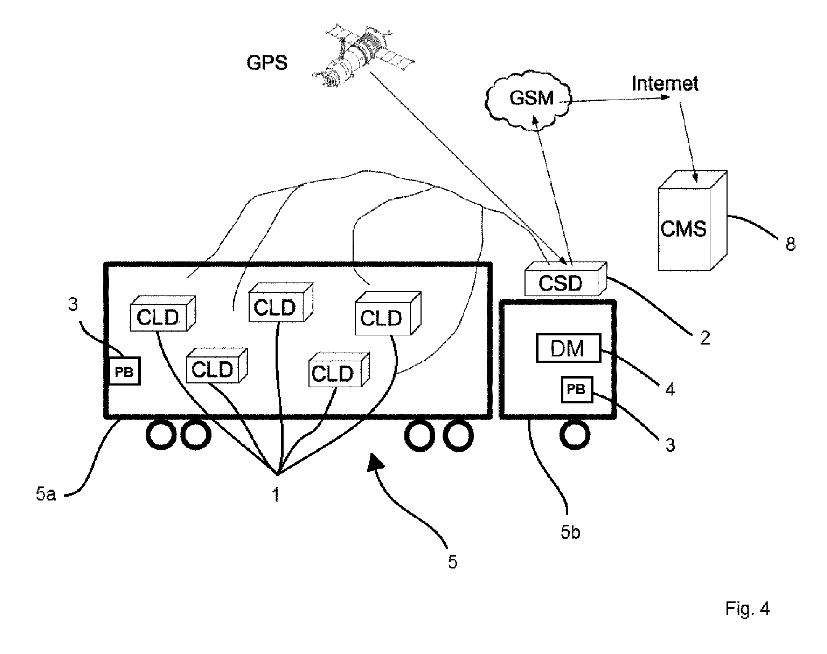

The components traveling along with the cargo are five cargo location devices 1 (CLDs), a cargo supervising device 2 (CSD), two panic buttons 3 (PBs) and a display means 4 (DM). As can be seen in figure 4, these components are all disposed at a truck 5, which is used for cargo transportation. Within the cargo hold 5a of the truck 5, several cargo items are stored, which are not shown in the figure. The CLDs 1 are each hidden within one of the cargo items. The CSD 2 is positioned at the cabin 5b of the truck 5 and configured to be on one hand in short range communication with the CLDs 1, via the exchange of radio frequency messages and on the other hand in long range communication with cargo control means 6 (CCM), due to the exchange of messages via GSM and internet, as shown in figure 4. The DM 4 is positioned within the cabin 5b in such a way, that the driver of the truck 5 can conveniently watch the DM 4 while he is driving the truck 5. Also disposed within the cabin 5b of the truck 5 is one PB 3. The second PB 3 is positioned within the cargo hold 5a. In this manner, one PBs 3 can be pressed by the driver sitting in the cabin 5b and the other PB 3 can be pressed by a person escorting the cargo in the cargo hold 5a.

Alternatively to the described embodiment more than one truck might be used for cargo transportation. In this case all trucks will be equipped like the one described above and the system according to the present invention will comprise more than one CSD 2. Furthermore, if the cargo of more than one client has to be simultaneously monitored there can also be more than one transport means, which would all be equipped with a CSD 2, several CLDs 1, PBs 3 and at least one DM 4.

The components being positioned remote to the truck 5 and thereby remote to the cargo are the cargo control means 6 (CCM) and the tracking means 7. The CCM 6 comprise a cargo management server 8 (CMS), which is located at a secure place for data servers. The CCM 6 furthermore comprises a cargo control center 9 (CCC), which is positioned at the head quarter of the undertaking operating the system according to the present invention and a customer information system 10 (CIS), which is a group of secured base software applications that are loaded in the CMS 8 of the CCM 6.

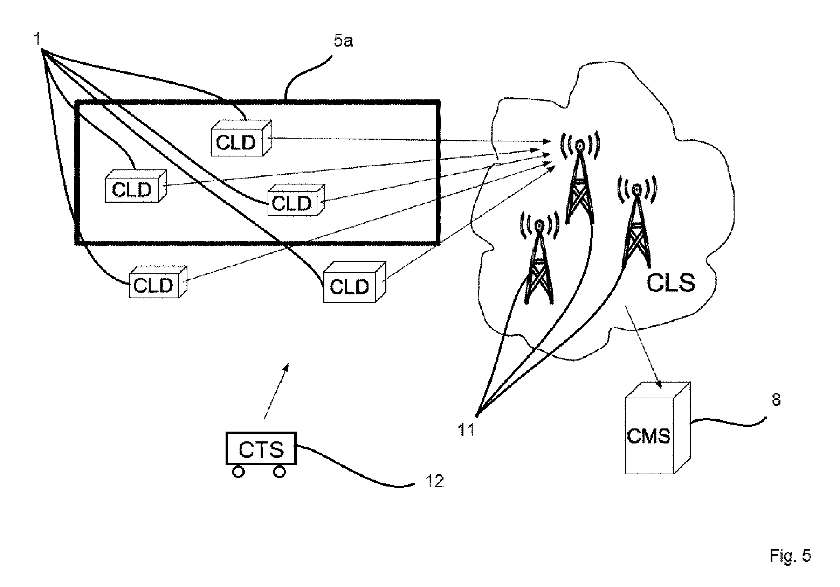

As tracking means 7 fixed tracking means, also referred to as cargo listening stations 11 (CLSs) as well as mobile tracking means, also referred to as cargo tracking stations 12 (CTSs) are provided. As can be seen in figure 5, the CLSs 11 are a group of towers that are positioned with distance between them over a given geographical region. The CLSs 11 - in analogy to the towers used for mobile phone communication - thereby form a grid. The mobile tracking devices, i.e. the CTSs 12 are specially equipped cars.

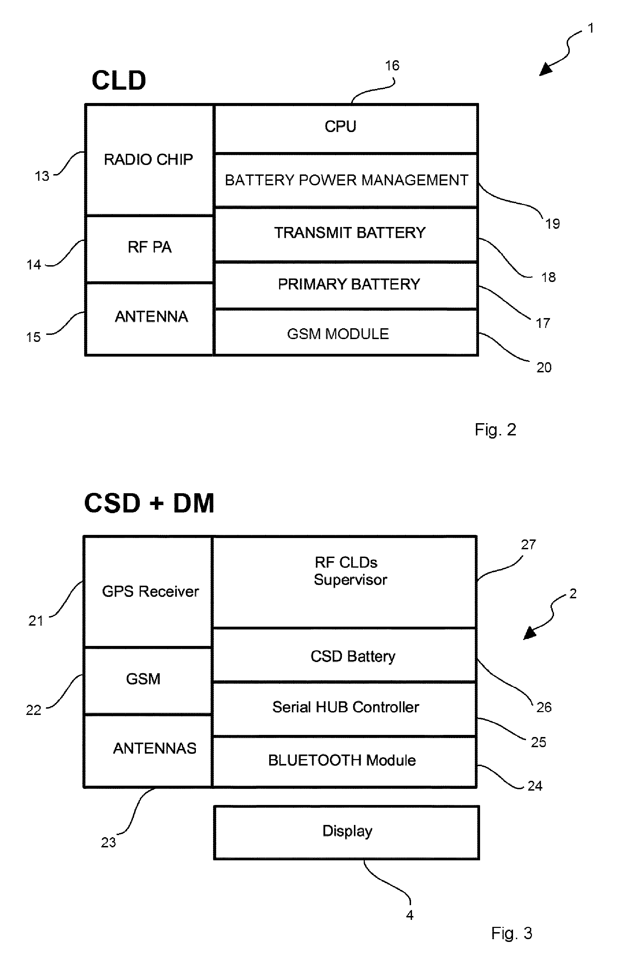

The CLDs 1 are autonomous devices, which each have the form of a small box, so that they can be easily hidden within the cargo items, for example within the packaging of the cargo. Here, the CLDs 1 are half-duplex digital modulation radio frequency transceivers. As can be seen in figure 2, which shows the internal components of CLD 1, each CLD 1 comprises a radio chip 13, a radio frequency power amplifier 14, an antenna 15, a CPU 16, a primary battery 17, a transmit battery 18 as well as a battery power management system 19. Both, the primary battery 17 and the transmit battery 18 are rechargeable and configured to last four months without the need of recharging. The radio chip 13 is in charge of generating modulated radio frequency signals to be transmitted from the CLD 1, and of demodulating signals that are received by the CLD 1. Data sent or received by the radio chip 13 will be exchanged with the CPU 16 of the CLD 1, which is in charge of data analysis of the radio signals received, especially in charge of determining the current distance to the CSD 2, from the historical signal strength of the radio signals sent by the CSD 2. The antenna 15 is provided for emitting and receiving radio signals, while the radio frequency power amplifier 14 allows for the transition of radio frequency signals. The primary battery 17 is for the operation of the CPU 16 and the radio chip 13 of the CLDs 1. The primary battery 17 is a long time, low current battery. Since the power drain for the operation of the radio frequency power amplifier 14 is comparably high, the transmit battery 18 is provided, which energizes the radio frequency power amplifier 14. The battery power management system 19 is for the control of power consumption of the primary battery 17 and the transmit battery 18.

The CLDs 1 are configured to intermittently send radio frequency check messages to the CSD 2, as indicated in figure 1 with an arrow labeled "CHECKn".

Furthermore, the CLDs 1 are configured to automatically switch from monitoring mode to tracking mode in response to several events. On one hand this happens when a radio frequency signal transmission from the CSD 2 ends. On the other hand, this happens when one of the PBs 3 is activated by the driver or a person accompanying the cargo.

Also, means for determining the spatial distance between the CLDs 1 and the CSD 2 are provided within each CLD 1. Here, in the CPU 16 of the CLDs 1 a specific algorithm is implemented, which continuously calculates the changes in the signal strength of the radio signals that are transmitted from the CSD 2 to the CLDs 1, in particular continuously calculates the changes in RSSI-value from the signals sent by the CSD 2. The CLDs 1 will also switch from monitoring to tracking mode, when the value of the RSSI between a CLD 1 and the CSD 2 changes more than a maximal change-value. Furthermore, a RSSI value between CLDs1 and CSD 2 is stored within the CLDs 1, which approximately corresponds to the spatial dimensions of the cargo hold 5a of the truck 5. If the RSSI exceeds a given change, the respective CLD 1 will also automatically switch from monitoring to tracking mode.

The CLD 1 further comprises a GSM module 20 with a GSM radio modem, which is configured to be registered to the existing cellular network. With the use of the GSM module 20 it is possible to determine the position of the CLDs 1 with a precision of at least up to one cell of the cellular network.

The CSD 2 comprises several internal components, as can be seen in figure 3. Those are a GPS receiver 21, a GSM module 22, antennas 23, a bluetooth module 24, a serial hub controller 25, a battery 26 for supplying electrical energy to the CSD 2 and a RF CLD supervisor unit 27.

The GPS receiver 21 allows the CSD 2 to determine and coordinates location information, speed, time and dates at any time during the cargo transport procedure with the truck 5. In the embodiment shown in figure 3 two GPS receivers 21 are provided in order to increase GPS information availability and reliability. Of the two GPS receivers 21 only one is shown in figure 3.

The GSM module 22 is a module for GPRS data communication over the cellular footprint with the CMS 8. There is also provided a second GSM module 22, which is not shown in the figure. The two GSM modules 22 have two different carriers to increase data communication reliability. Antennas 23 are used for transmitting and receiving radio signals, in a manner known per se.

The Bluetooth module 24 allows wireless communication between the CSD 2 and the DM 4.

The RF CLD supervisor unit 27 of the CSD 2 corresponds in its structure to that of a single CLD 1, as shown in figure 2, but has different internal programming. There is a radio chip and a power amplifier (not shown in figure 3) for the link with the CLDs 1. The RF CLD supervisor unit 27 is configured to monitor the CLD-channel in particular the VHF-channel, in order to listen to the check messages from the CLDs 1.

The serial hub controller 25 is in charge of internal serial communication between the GSM modules 22, the RF CLD supervisor unit 27 and the display means 4.

The CSD 2 furthermore is configured to send acknowledge radio signals (acknowledge messages) to the CLDs 1 in response to the check messages sent from the CLDs 1, as indicated in figure 1 with an arrow labeled "ACKn".

In analogy to the CLDs 1 and the CSD 2, the PBs 2 are also autonomous, self-powered devices. The PBs 3 comprise means for transmitting radio signals to and receiving radio signals from the CSD 2, an energy source as well as an alarm mechanism, which can be manually activated by the driver, or by a person accompanying the cargo in the cargo hold 5a. The display means 4 also comprise means for transmitting radio signals to and receiving radio signals from CSD 2, to be in wireless communication with the CSD 2.

The DM 4 enables the control as well as help checks of the system according to the present invention. The display means 4 is to display information to the driver of the truck 5. Furthermore the driver can communicate via text messages with the CCC 9 or a customer.

The CCM 6, which forms the central controlling unit of the system according to the present invention, comprises the CCC 9, as shown in figure 1. The CCC 9 is a 24/7 control center, that provides all of the monitoring tasks of the cargo in transit. It also provides coordination with customers and authorities. Therefore the CCC 9 has full access to all commands to the CSD 2, which is disposed at the truck 5. The CCM 6 furthermore comprises the CMS 8, which is the back end and hard of the operation of a system according to the present invention. The CMS 8 is configured to send and receive all necessary information to and from the CSD 2. It furthermore keeps data bases of all CSDs 2, which are currently used, of all CLDs 1, of position, date time, etc. It is furthermore configured to provide a mapping service for display of the CLDs 1 positioned to the CCC 9 and via the CIS 10 to the customer.

The CLSs 11, representing the fixed tracking means, are configured to receive the tracking signals that are emitted from the CLDs 1 in tracking mode. The CTSs 12, which are the mobile tracking means, are cars that are equipped with devices that can receive the tracking signals emitted from the CLDs 1 in tracking mode. The tracking means are configured to decode and report all messages from the CLDs 1 and report all relevant information (serial number, position, date, time and RSSI-value) to the CMS 8 of the CCM 6. The CCC 9 of the CCM 6 then has real time information about position of the CLDs 1 and can easily coordinate the mobile tracking means, the CTSs 12 for final tracking and location of a stolen cargo item.

The CLSs 11 and the CTSs 12 furthermore comprise a radio frequency direction finding unit, which is configured to determine the bearing angle of the tracking signals transmitted from the CLDs 1 in tracking mode. The radio frequency direction finding unit is not shown in the figures. It comprises four or eight omni-directional antennas that are arranged in a circular way. The antennas are connected to an RF combining or a so called "summer" circuit, which allows the signals of the antennas to be combined in a way which simulates a continuous rotation of the circular antenna array about its axis of symmetry. The "rotating" antennas, which are used as a receiver, then relatively "move" with respect to the transmission source of the tracking signal, the CLDs 1 and the Doppler-effect can be used to determine the bearing angle of the CLDs 1 in a manner known to the person skilled in the art. Equipped like this, the tracking means 7 can identify the direction from which a CLD 1, which is hidden in a stolen cargo item to be tracked, is transmitting. Knowing the direction of origin, the CTSs 12 can be sent for final tracking of a stolen cargo item.

For secure storage the CSD 2, CLDs 1, the PBs 3 and the DM 4 during non-transport periods, there is be provided a "kit box", in which the components are stored while not in use. The "kit box" is not shown in the figures. The "kit box" comprises a deactivation mechanism, which automatically deactivates the CSD 2 and CLDs 1, PBs 3 and DM 4 as soon as they are positioned within the box.

For the monitoring of cargo items during their transportation, the system according to the present invention will be set up for a given trip by the customer through the CIS 10, with a shipment notification to the CCC 9. The CCC 9 acknowledges the notification by returning a "green light" to the customer and also to the driver of the truck 5. From this moment on, the CLDs 1 will start to transmit their unique check messages to the CSD 2 with a preset proof-of-life-rate and the CSD 2 will acknowledge all check messages from the CLDs 1, as indicated with the arrows labeled "ACKn" and "CHECKn" in figure 1. Every time the CSD 2 receives a check message from a CLD 1, it replies with an acknowledge message to the respective CLD 1, including not only the acknowledge itself, but also a time stamp of the clock of its internal system and the serial number assigned to that particular CLD 1. The CLD 1 then has enough information, to synchronize its own check message transmission, which ensures that there is no overlap with transmissions of other CLDs 1. Once every CLD 1 positioned within the cargo hold 5a of the truck 5 has been acknowledged, the CSD 2 formats a message with the information about serial numbers of the CLDs 1, RSSI values received, position, time and date and reports this message to the CMS 8 via the main communication channel of the wide area network, in the described embodiment GSM and internet, as shown in figure 4. This information will be monitored by the CCC 9 and by the customer via the CIS 10. Also shown in figure 4 is, that the current position of the CSD 2 and thereby the truck 5 is determined with the use of a satellite.

The CSD 2 also determines the average RSSI value of each CLD 1 and creates a chronological history. At the same time, there is an algorithm running in the CPU of the RF CLD supervisor unit 27 of the CSD 2, which monitors the RSSI values between the CSD 2 and the CLDs 1 that are determined by the CSD 2. If a cargo item is stolen from the cargo hold 5a of the truck 5, as indicated in figure 5, where two CLDs 1 are shown outside the cargo hold 5a, the RSSI- value drops to a level that indicates that cargo is no longer in range and the CSD 2 delivers an alert message to the CCC 9. Because the CLDs are no longer detecting acknowledge messages from the CSD 2, they automatically switch to tracking mode.

Also, if the driver or a person escorting the cargo notice, that cargo is stolen, the driver or the person can press the PB 3 in the cargo hold 5a or the cabin 5b respectively. A signal will then be wirelessly transmitted from the activated PB 3 to the CSD 2 and the CSD 2 will in response to the signal deliver an emergency alert to the CCC 9. Also, then CSD 2 will cease the ACKn response and the CLDs 1 will switch from monitoring mode to tracking mode in response to the activation of a PB 3.

In tracking mode the CLDs 1 will transmits the tracking signal, which contains the CLD's 1 unique serial number for identification and a tail of zeroes for the tracking means 7 to perform direction finding and location of the cargo. By transmitting the tracking signal, the tracking operation of the CLSs 11 and the CTSs 12 is facilitated.

Furthermore, via the GSM module 20 of the CLDs 1, the CLDs 1 location can be determined via the existing cellular network with the precision of at least up to one cell of the cellular network.

After one operation of tracking and detection of the cargo, the batteries of the CLDs 1, CSD 2, PBs 3 and DM 4 will be recharged to ensure operation for the next monitoring and tracking cycle.

According to the present invention, due to the combination of monitoring the cargo in monitoring mode and being able to trace a stolen cargo item, that is equipped with a CLD, in tracking mode, a holistically cargo transportation security procedure, covering all possible events, is ensured.

## Claims

1. Cargo monitoring and tracking system, comprising:
- at least one cargo location device (1), configured to be disposed at, especially hidden in a cargo item or a group of cargo items, the cargo location device (1) comprising means (13, 14, 15) for transmitting and receiving radio signals, a central processing unit (16) and at least one energy source (17, 18),
- at least one cargo supervising device (2), configured to be disposed at a transport means (5) for the cargo items, comprising means (27) for transmitting radio signals to and receiving radio signals from the at least one cargo location device (1), means (22) to send and receive information via a wide area network and at least one energy source (26), and
- cargo control means (6), comprising means for wirelessly sending data to and receiving data from the at least one cargo supervising device (2) via a wide area network and a database, the cargo control means (6) being configured to store data, especially data that has been sent to or received from the at least one cargo supervising device (2), in the data base,
wherein the at least one cargo location device (1) is configured to be operated in a monitoring mode in which it transmits a monitoring radio signal adapted to be received by the at least one cargo supervising device (2) and a tracking mode in which it transmits a tracking radio signal which is traceable by tracking means (7) and wherein the cargo location device (1) is configured to automatically switch between the monitoring mode and the tracking mode.

2. System according to claim 1, **characterized in that** the at least one cargo location device (1) comprises means for determining its relative spatial distance to the cargo supervising device and is configured to switch from monitoring mode to tracking mode when a given value of spatial distance is exceeded and/or when a current value of spatial distance is changed and/or when a radio signal transmission from the at least one cargo supervising device (2) to the at least one cargo location device (1) ends.

3. System according to one of the aforementioned claims, **characterized in that** at least one wireless alarm device (3), which is configured to be joined to the transport means (5) for the cargo items is provided, the at least one wireless alarm device (3) comprising means for transmitting radio signals to and receiving radio signals from the at least one cargo supervising device (2), at least one energy source and an alarm mechanism which can be manually activated by a user, wherein especially the at least one cargo location device (1) is configured to switch from monitoring mode to tracking mode when the alarm mechanism of the wireless alarm device (3) is manually activated by a user.

4. System according to one of the aforementioned claims, **characterized in that** the means for transmitting and receiving radio signals of the at least one cargo location device (1) comprise a radio chip (13), which is configured to generate modulated radio signals and to demodulate radio signals and/or at least one antenna (15) and/or a power amplifier (14) and/or the energy source of the at least one cargo location device (1) comprises a primary battery (17), a transmit battery (18) and a battery power management system (19).

5. System according to one of the aforementioned claims, **characterized in that** the at least one cargo location device (1) is configured to intermittently send check radio signals to the at least one cargo supervising device (2) in monitoring mode and the at least one cargo supervising device (2) is configured to intermittently send acknowledge radio signals to the at least one cargo location device (1) in response to the check radio signals.

6. System according to one of the aforementioned claims, **characterized in that** the at least one cargo location device (1) comprises a GSM radio modem configured to be registered to a cellular network.

7. System according to one of the aforementioned claims, **characterized in that** the at least one cargo supervising device (2) comprises means for determining its spatial distance to the at least one cargo location device (1) and is configured to switch to an alert mode when a given value of spatial distance is exceeded and/or when a current value of spatial distance is changed.

8. System according to one of the aforementioned claims, **characterized in that** the at least one cargo supervising device (2) is configured to communicate with a number of cargo location devices (1) which are assigned to the at least one cargo supervising device (2).

9. System according to at least claim 5 and 8, **characterized in that** the at least one cargo supervising device (2) is configured to allocate specific time slots for the transmission of the check radio signals to each of the number of cargo location devices (1), the time slots for different cargo location devices (1) especially not being in overlap with each other.

10. System according to one of the aforementioned claims, **characterized in that** the at least one cargo supervising device (2) comprises at least one GPS receiver (21) and/or at least one GSM module (22) and/or at least one Bluetooth module (24) and/or at least one antenna (23) and/or at least one serial hub controller (25).

11. System according to one of the aforementioned claims, **characterized in that** the at least one cargo supervising device (2) comprises a RF cargo location device supervisor unit (27) with a radio chip, a radio power amplifier and a central processing unit.

12. System according to one of the aforementioned claims, **characterized in that** the cargo control means (6) comprise a cargo control center (9), configured to control the at least one cargo supervising device (2) and/or a cargo management server (8), configured to keep data bases with information about the at least one cargo supervising device (2) and the at least one cargo location device (1), about date, time and position and/or the cargo control means (6) are configured to send information to and receive information from a customer via a software based, especially web based, customer information system (10).

13. System according to one of the aforementioned claims, **characterized in that** at least one display means (4) for displaying data to a user is provided, which is configured to be disposed at a transport means (5), the at least one display means (4) comprising means for transmitting radio signals to and receiving radio signals from the at least one cargo supervising device (2).

14. System according to one of the aforementioned claims, **characterized in that** tracking means (7), especially stationary (11) and/or mobile (12) tracking devices, are provided, which are configured to trace a tracking radio signal transmitted by the at least one cargo location device (1) in tracking mode, wherein especially the tracking means (7) comprise a radio frequency direction finding unit, which is configured to determine the bearing angle of the tracking signal transmitted from the at least one cargo location device (1) in tracking mode, especially by application of a Doppler shift based radio frequency direction finding technology.

15. Cargo location device (1), configured to be disposed at, especially hidden in a cargo item or a group of cargo items, the cargo location device (1) comprising means (13, 14, 15) for transmitting and receiving radio signals, a central processing unit (16) and at least one energy source (17, 18), and being configured to be operated in a monitoring mode in which it transmits a monitoring radio signal, which is receivable by monitoring means (2) and a tracking mode in which it transmits a tracking radio signal which is traceable by tracking means (7) and wherein the cargo location device (1) is configured to automatically switch between the monitoring mode and the tracking mode.
